# EUROPEAN PATENT SPECIFICATION

(11) **EP 1 452 433 B1**
(45) Date of publication and mention of the grant of the patent: **09.02.2005**
(21) Application number: 04003442.3
(22) Date of filing: 16.02.2004
(51) Int. Cl.: B62K 23/04

(54) **Twist grip for operating a bicycle transmission**
Drehgriffschalter für Fahrradgetriebe
Poignée tournante pour le changement de vitesse de bicyclette

(30) Priority: 28.02.2003 US 378416
(43) Date of publication of application: 01.09.2004
(73) Proprietor: Shimano Inc., Osaka 590-8577 (JP)
(72) Inventor: Masui, Takuji, Osaka (JP)
(74) Representative: Hofmann, Harald

(56) References cited:
- EP-A- 0 669 249
- EP-A- 0 790 177
- DE-C- 688 541
- US-B1- 6 199 447
- US-B1- 6 389 929

## Description

The present invention is directed to bicycles and, more particularly, to a twist grip control for a bicycle transmission.

Conventional shift control devices for bicycle transmissions typically include a lever or twist grip that is manually rotated in two directions. One rotational direction is used to upshift the bicycle transmission, and the other rotational direction is used to downshift the bicycle transmission. The bicycle transmission moves by an amount proportional to the movement of the shift control device in either direction.

In many ways, lever-operated shift control devices are easier to rotate than twist-grip devices because of the shape of the lever. Twist-grip shift control devices typically comprise a cylindrical member that rotates around the bicycle handlebar. The rider wraps his or her palm around the cylindrical member and rotates it in a desired direction depending on the shifting operation to be performed. In order to function effectively, the surface and/or shape of the twist- grip should ergonomically fit the rider's hand and enhance the frictional forces between the cylindrical member and the rider's hand. One idea for a twist-grip is disclosed in U. S. Patent No. 6,199,447 B1. That twist-grip has a bulbous shape such that the index finger of the rider engages a relatively smaller diameter portion of the twist-grip and the middle finger of the rider engages a relatively larger portion of the twist-grip. However, such a twist-grip provides frictional contact only on the underside surface of the rider's hand. It does not provide frictional contact between the rider's fingers. Such additional frictional forces would add to the effectiveness of the twist-grip. Also, while a larger diameter portion theoretically accommodate the greater length of the middle finger, it creates a greater radius of curvature of the middle finger and tends to form a space between the tip of the middle finger and the palm. Such a configuration can decrease the ergonomics of the twist-grip and the mechanical advantage of the finger in some situations.

The present invention is directed to inventive features of a twist-grip for a bicycle transmission. In one embodiment, a twist-grip for controlling the operation of a bicycle transmission comprises a rotatable member structured to be mounted coaxially around an axis of a bicycle handlebar so that the rotatable member can rotate relative to the handlebar; a grip disposed on the rotatable member so that the rotatable member can be rotated by manipulating the grip; an index finger portion adapted to receive an index finger of a rider; a middle finger portion adapted to receive a middle finger of the rider; and an intermediate portion disposed between the index finger portion and middle finger portion. The intermediate portion has a flange-shaped portion so that the flange-shaped portion can be located between the index and middle fingers of the rider. If desired, the middle finger portion may have an outer diameter less than an outer diameter of the index finger portion. Additional inventive features will become apparent from the description below, and such features alone or in combination with the above features may form the basis of further inventions as recited in the claims and their equivalents.

Fig. 1 is an oblique view of a combined brake and shifting device;

Fig. 2 is a top view of the combined brake and shifting device;

Fig. 3 is a front view of the combined brake and shifting device;

Fig. 4 is a bottom view of the combined brake and shifting device;

Fig. 5 is a rear view of the combined brake and shifting device;

Fig. 6 is a view taken along line VI-VI in Fig. 4; and

Fig. 7 is a view taken along line VII-VII in Fig. 6.

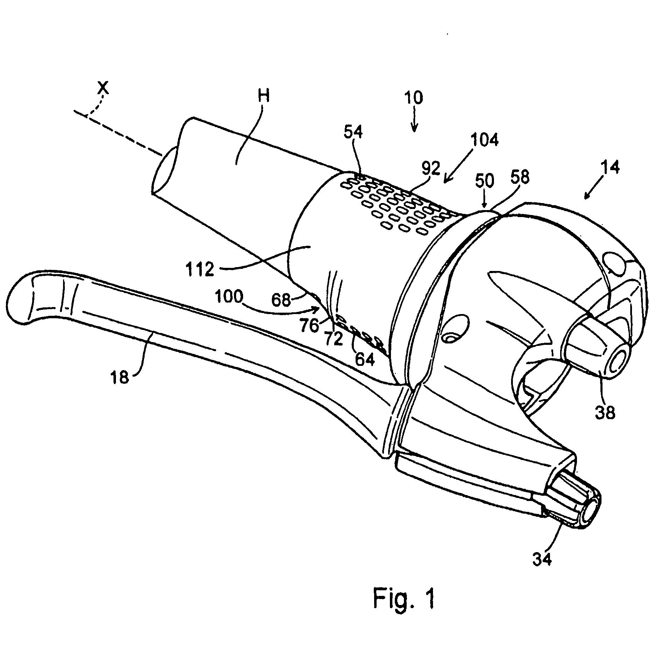

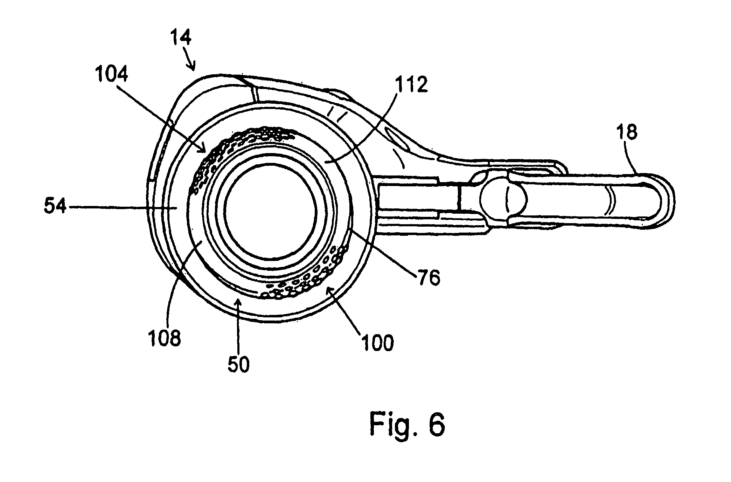

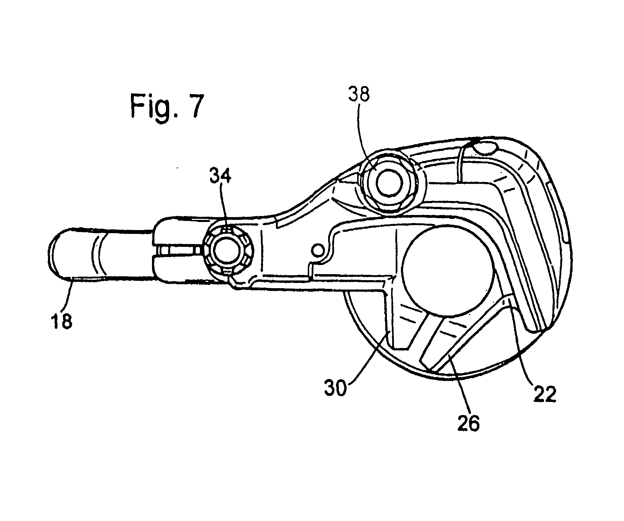

Fig. 1 is an oblique view of a twist-grip 10 mounted to a handlebar H. In this embodiment, the outboard end of the handlebar H is to the left side in Fig. 1, and the inboard side of the handlebar H is to the right side in Fig. 1. Twist-grip 10 is rotatably coupled to a control housing 14 to which is pivotably mounted a brake lever 18. Control housing 14 is attached to handlebar H in a known manner by a mounting band 22 (Fig. 7) having a pair of mounting ears 26 and 30. A bolt (not shown) tightens mounting ears 26 and 30 toward each other to secure control housing 14 around handlebar H. A transmission control mechanism (not shown) is housed within control housing 14, and rotating twist-grip 10 in the clockwise or counterclockwise direction (Fig. 6) operates the transmission control mechanism. Bowden cable attachment drums 34 and 38 are disposed on control housing 14 for terminating the outer casings of Bowden cables (not shown), each of which has an inner wire that slides within its respective outer casing. The inner wire of the Bowden cable attached to Bowden cable attachment drum 34 is coupled to brake lever 18 so that brake lever 18 may operate a braking mechanism for the bicycle, and the inner wire of the Bowden cable attached to Bowden cable attachment drum 38 is coupled to the transmission control mechanism housed within control housing 14.

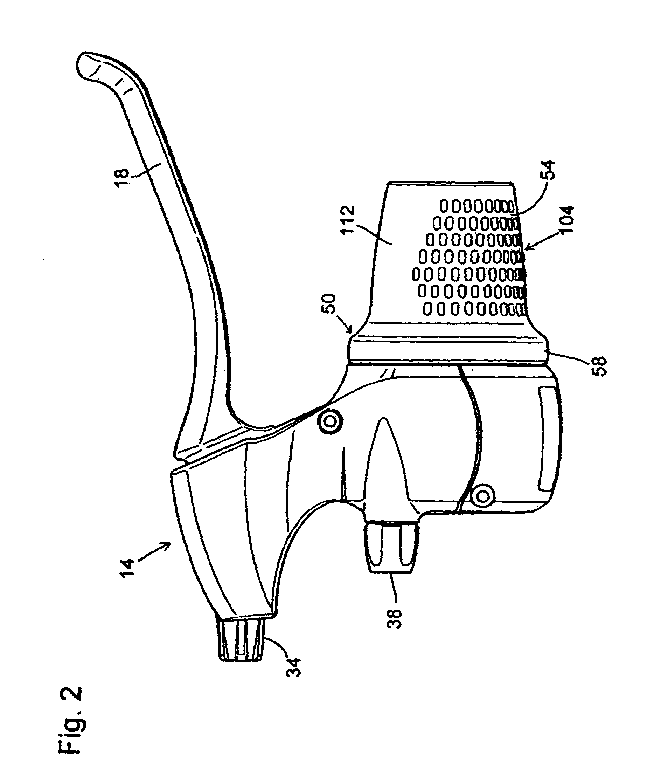

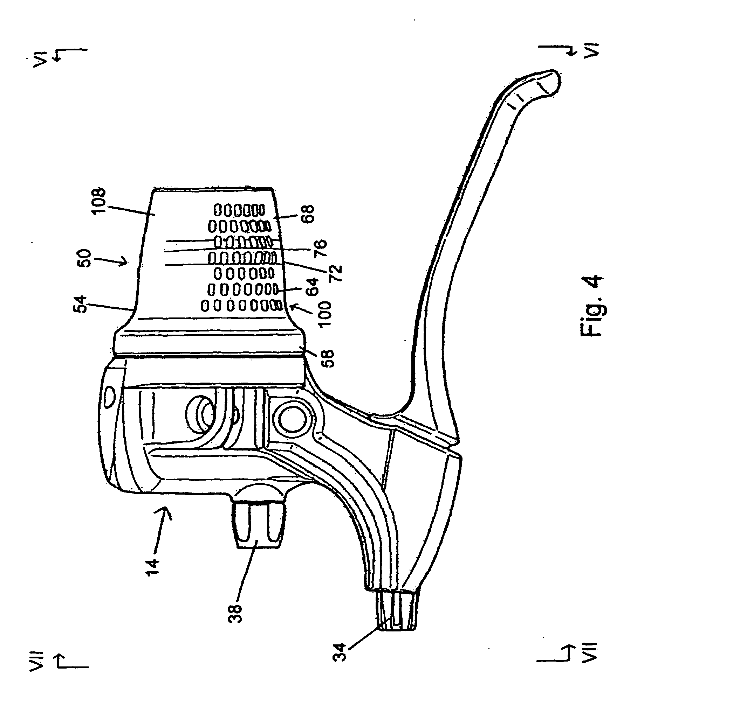

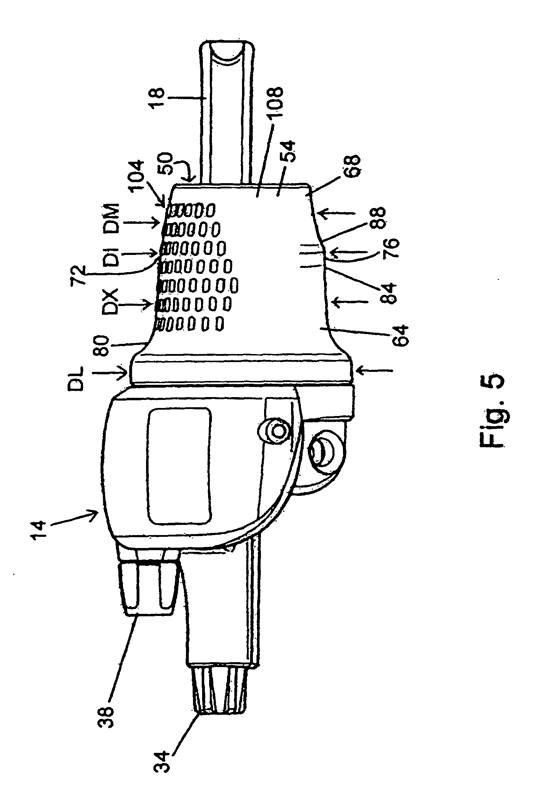

As shown in Figs. 1-7, twist-grip 10 includes a rotatable member 50 structured to be mounted coaxially around an axis X of handlebar H so that the rotatable member 50 can rotate relative to handlebar H. A grip 54 is disposed on rotatable member 50 so that manipulating grip 54 can rotate rotatable member 50. Grip 54 may comprise the outer surface of a one-piece rotatable member, the outer surface of a separate cover for a rotatable member, or some other grip-like surface that performs a similar function. The grip 50 includes a large diameter portion 58 having an outer diameter DL (Fig. 5), an index finger portion 64 adapted to receive an index finger of a rider and having an outer diameter DX, a middle finger portion 68 adapted to receive a middle finger of the rider and having an outer diameter DM, and an intermediate portion 72 disposed between the index finger portion 64 and the middle finger portion 68. The intermediate portion 72 has a flange-shaped or wave-shaped portion 76 so that the flange-shaped portion 76 can be located between the index and middle fingers of the rider. The intermediate portion 72 has an outer diameter DI at the flange-shaped portion 76.

In this embodiment, twist-grip 10 has a generally cylindrical shape, and it is structured to be mounted inboard of the end of handlebar H. Middle finger portion 68 is structured to be mounted closer to the end of handlebar H than the index finger portion 64. At least a portion of the index finger portion 64, the middle finger portion 68 and the flange-shaped portion 76 are disposed on the grip 50. Furthermore, each of the index finger portion 64, the middle finger portion 68 and the intermediate portion 72 has the ability to rotate rotatable member 50 when manipulated by the rider. The outer diameter DM of middle finger portion 68 is less than the outer diameter DX of the index finger portion 64. A junction 80 between the large diameter portion 58 and the index finger portion 64 forms a concave shape, a junction 84 between the index finger portion 64 and the flange-shaped portion 76 forms another concave shape, and a junction 88 between the flange-shaped portion 76 and the middle finger portion 68 forms another concave surface.

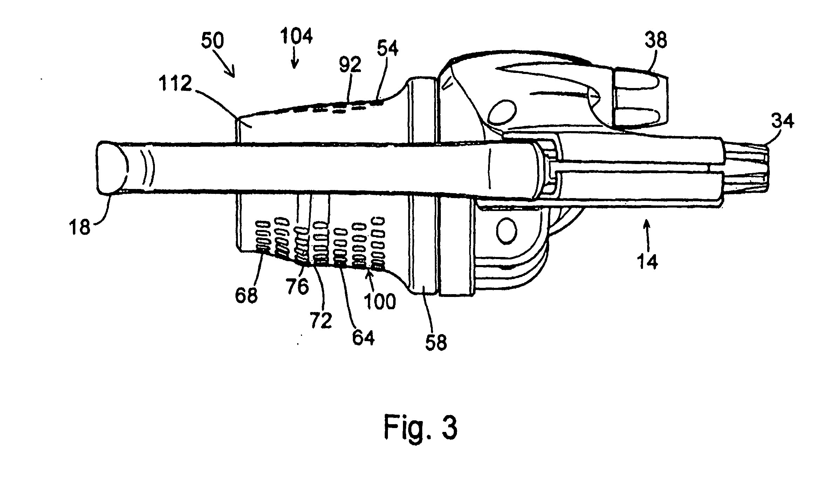

As best seen in Figs. 1 and 3, the flange-shaped portion 76 extends only partially around grip 54. Thus, there is a flange- or waveless portion 92 that slopes downward from the large diameter portion 58 to the end of the grip 54. As a result, index finger portion 64 and middle finger portion 68 are adapted to fit the rider's index and middle fingers, respectively, and the waveless portion 92 is adapted to fit the rider's palm. Of course, in other embodiments the flange-shaped portion 76 may extend completely around the grip 54.

As best seen in Fig. 6, in this embodiment a first plurality of traction features in the form of first traction bumps 100 is formed on one side of grip 54, and a second plurality of traction features in the form of second traction bumps 104 is formed on the opposite side of grip 54. There is a lack of such traction bumps at surfaces 108 and 112 between the first and second traction bumps 100 and 104. Of course, in other embodiments there may be traction features around the entire grip 58, no traction features, different traction features at different locations on the grip, or no traction features. As seen in Figs. 3-6, at least a portion of the flange-shaped portion 76 is disposed among the plurality of traction features 100. In some embodiments, it may be desirable to have only a portion of the flange-shaped portion 76 disposed among a plurality of traction features.

While the above is a description of various embodiments of inventive features, further modifications may be employed without departing from the scope of the present invention as defined in the appended claims. For example, the size, shape, location or orientation of the various components may be changed as desired. Components that are shown directly connected or contacting each other may have intermediate structures disposed between them. The functions of one element may be performed by two, and vice versa. The structures and functions of one embodiment may be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the scope of the invention should not be limited by the specific structures disclosed or the apparent initial focus on a particular structure or feature.

## Claims

1. A twist grip (10) for controlling the operation of a bicycle transmission comprising:
a rotatable member (50) structured to be mounted substantially around a bicycle handlebar so that the rotatable member (50) can rotate relative to the handlebar;
a grip (54) disposed on the rotatable member (50) so that the rotatable member (50) can be rotated by manipulating the grip (54);
an index finger portion (64) adapted to receive an index finger of a rider;
a middle finger portion (68) adapted to receive a middle finger of the rider;
an intermediate portion (72) disposed between the index finger portion (64) and the middle finger portion (68);
wherein the intermediate portion (72) has a flange shaped portion (76) so that the flange shaped portion (76) can be located between the index and middle fingers of the rider.

2. The twist grip according to claim 1 wherein the middle finger portion (68) has an outer diameter less than an outer diameter of the index finger portion (64).

3. The twist grip according to claim 1 or 2 wherein at least a portion of the index finger portion (64), the middle finger portion (68) and the flange shaped portion (76) are disposed on the grip (54).

4. The twist grip according to anyone of claims 1 to 3 further comprising a first plurality of traction features (100) disposed on the surface of the grip (54).

5. The twist grip according to anyone of claims 1 to 4 wherein the flange shaped portion (76) and/or the first plurality of traction features (100) extends only partially around the grip (54).

6. The twist grip according to claim 5 wherein at least a portion of the flange shaped portion (76) is disposed among the first plurality of a traction features (100).

7. The twist grip according to claim 6 wherein only a portion of the flange shaped portion (76) is disposed among the first plurality of traction features (100).

8. The twist grip according to anyone of claims 1 to 7 wherein the grip (54) has a substantially cylindrical shape.

9. The twist grip according to anyone of claims 1 to 8 wherein a junction between the index finger portion (64) and the intermediate portion (72) forms a concave surface.

10. The twist grip according to anyone of claims 1 to 9 wherein a junction between the middle finger portion (68) and the intermediate portion (72) forms a concave surface.

11. The twist grip according to anyone of claims 1 to 10 wherein the rotatable member (50) is structured to be mounted substantially coaxially around an axis of said bicycle handlebar.

## Patentansprüche

1. Drehgriff (10) für die Steuerung des Betriebs einer Fahrrad-Schaltung, umfassend:
ein drehbares Element (50), strukturiert, um im Wesentlichen um eine Fahrradlenkstange herum montiert zu werden, so dass das drehbare Element (50) relativ zur Lenkstange gedreht werden kann;
einen Griff (54), angeordnet an dem drehbaren Element (50), so dass das drehbare Element (50) durch Manipulieren des Griffs (54) gedreht werden kann;
einen Zeigefingerabschnitt (64), geeignet, einen Zeigefinger eines Fahrers aufzunehmen;
einen Mittelfingerabschnitt (68), geeignet, einen Mittelfinger des Fahrers aufzunehmen;
einen dazwischen liegenden Abschnitt (72), angeordnet zwischen dem Zeigefingerabschnitt (64) und dem Mittelfingerabschnitt (68);
wobei der dazwischen liegende Abschnitt (72) einen flanschförmigen Abschnitt (76) aufweist, so dass der flanschförmige Abschnitt (76) zwischen dem Zeige- und dem Mittelfinger des Fahrers angeordnet werden kann.

2. Drehgriff nach Anspruch 1, bei welchem der Mittelfingerabschnitt (68) einen Außendurchmesser aufweist, kleiner als ein Außendurchmesser des Zeigefingerabschnitts (64).

3. Drehgriff nach Anspruch 1 oder 2, bei welchem zumindest ein Teil des Zeigefingerabschnitts (64), des Mittelfingerabschnitts (68) und des flanschförmigen Abschnitts (76) auf dem Griff (54) angeordnet sind.

4. Drehgriff nach einem der Ansprüche 1 bis 3, ferner umfassend eine erste Vielzahl von Traktionselementen (100), angeordnet auf der Oberfläche des Griffs (54).

5. Drehgriff nach einem der Ansprüche 1 bis 4, bei welchem der flanschförmige Abschnitt (76) und/oder die erste Vielzahl der Traktionselemente (100) sich lediglich teilweise um den Griff (54) herum erstrecken.

6. Drehgriff nach Anspruch 5, bei welchem zumindest ein Teil des flanschförmigen Abschnitts (76) innerhalb der ersten Vielzahl der Traktionselementen (100) angeordnet ist.

7. Drehgriff nach Anspruch 6, bei welchem lediglich ein Teil des flanschförmigen Abschnitts (76) innerhalb der ersten Vielzahl der Traktionselementen (100) angeordnet ist.

8. Drehgriff nach einem der Ansprüche 1 bis 7, bei welchem der Griff (54) eine im Wesentlichen zylindrische Form aufweist.

9. Drehgriff nach einem der Ansprüche 1 bis 8, bei welchem eine Verbindung zwischen dem Zeigefingerabschnitt (64) und dem dazwischen liegenden Abschnitt (72) eine konkave Fläche ausbildet.

10. Drehgriff nach einem der Ansprüche 1 bis 9, bei welchem eine Verbindung zwischen dem Mittelfingerabschnitt (68) und dem dazwischen liegenden Abschnitt (72) eine konkave Fläche ausbildet.

11. Drehgriff nach einem der Ansprüche 1 bis 10, bei welchem das drehbare Element (50) derart strukturiert ist, um im Wesentlichen koaxial um eine Achse der Fahrradlenkstange herum montiert zu werden.

## Revendications

1. Une poignée tournante (10) pour contrôler le fonctionnement d'une transmission de bicyclette comprenant :
un organe tournant (50) conçu pour être monté sensiblement autour d'un guidon de bicyclette pour que l'organe rotatif (50) puisse tourner relativement par rapport au guidon ;
une poignée (54) disposée sur l'organe rotatif (50) pour que l'organe rotatif (50) puisse être tourné en manipulant la poignée (54) ;
une partie doigt index (64) adaptée pour recevoir un doigt index d'un cycliste ;
une partie doigt du milieu (68) adaptée pour recevoir un doigt du milieu du cycliste ;
une partie intermédiaire (72) disposée entre la partie doigt index (64) et la partie doigt du milieu (68) ;
dans laquelle la partie intermédiaire (72) a une partie en forme de bourrelet (76) pour que la partie en forme de bourrelet (76) puisse être disposée entre les doigts index et du milieu du cycliste.

2. Poignée tournante selon la revendication 1 dans laquelle la partie du doigt du milieu (68) a un diamètre extérieur inférieur à un diamètre extérieur de la partie doigt index (64).

3. Poignée tournante selon la revendication 1 ou 2 dans laquelle au moins une partie de la partie doigt index (64), la partie doigt du milieu (68) et la partie en forme de bourrelet (76) sont disposées sur la poignée (54).

4. Poignée tournante selon l'une quelconque des revendications 1 à 3 comprenant de plus une première pluralité de particularités de traction (100) disposée sur la surface de la poignée (54).

5. Poignée tournante selon l'une quelconque des revendications 1 à 4 dans laquelle la partie en forme de bourrelet (76) et/ou la première pluralité de particularités de traction (100) s'étend seulement partiellement autour de la poignée (54).

6. Poignée tournante selon la revendication 5 dans laquelle au moins une partie de la partie en forme de bourrelet (76) est disposée parmi la première pluralité des particularités de traction (100).

7. Poignée tournante selon la revendication 6 dans laquelle seulement une partie de la partie en forme de bourrelet (76) est disposée parmi la première pluralité de particularités de traction (110).

8. Poignée tournante selon l'une quelconque des revendications 1 à 7 dans laquelle la poignée (54) a une forme sensiblement cylindrique.

9. Poignée tournante selon l'une quelconque des revendications 1 à 8 dans laquelle une jonction entre la partie doigt index (64) et la partie intermédiaire (72) forme une surface concave.

10. Poignée tournante selon l'une quelconque des revendications 1 à 9 dans laquelle une jonction entre la partie doigt du milieu (68) et la partie intermédiaire (72) forme une surface concave.

11. Poignée tournante selon l'une quelconque des revendications 1 à 10 dans laquelle l'organe rotatif (50) est conçu pour être monté sensiblement coaxiallement autour d'un axe dudit guidon de la bicyclette.
